Europäisches Patentamt

European Patent Office

Office européen des brevets

(19)

(11) Numéro de publication : **0 285 527 B1**

(12) **FASCICULE DE BREVET EUROPEEN**

(45) Date de publication du fascicule du brevet :
14.08.91 Bulletin 91/33

(51) Int. Cl.⁵ : **B23Q 7/14**, B62D 65/00,
**B60P 3/00**

(21) Numéro de dépôt : 88420073.4

(22) Date de dépôt : 02.03.88

(54) **Machine de transfert libre à chariots indépendants et motorisés.**

(30) Priorité : 04.03.87 FR 8703129

(43) Date de publication de la demande :
05.10.88 Bulletin 88/40

(45) Mention de la délivrance du brevet :
14.08.91 Bulletin 91/33

(84) Etats contractants désignés :
AT BE CH DE ES FR GB GR IT LI LU NL SE

(56) Documents cités :
WO-A-87/00493
CH-A- 631 939
DE-A- 3 318 469
US-A- 2 555 854
US-A- 3 696 756
US-A- 3 796 327
US-A- 3 845 718
US-A- 4 597 709
WT ZEITSCHRIFT FÜR INDUSTRIELLE FERTI-
GUNG, vcl. 76, no. 9, septembre 1986, pages
528-532; M. BERTINO: "Leitliniengeführtes
Flurförderzeugsystem"

(56) Documents cités :
MACHINES & TOOLING, vol. 49, no. 2, février
1978, pages 4-7; V.I. VORONTSOV:
"Production automation - Mechanized and
automated handling in a shop producing axial-
ly-symmetrical parts"
ROBOTICS AGE, vol. 5, no. 5, septembre/oc-
tobre 1983, pages 20-29; H.R. GROTE: "A
cog-wheel driven robot cart"

(73) Titulaire : Teissler, Etienne Maurice
Route de Montvendre
F-26120 Malissard (FR)
Titulaire : Marie, Bruno Alexis Eugène
Camping Alain Merle Route de Valence
F-26120 Chabeuil (FR)

(72) Inventeur : Teissler, Etienne Maurice
Route de Montvendre
F-26120 Malissard (FR)
Inventeur : Marie, Bruno Alexis Eugène
Camping Alain Merle Route de Valence
F-26120 Chabeuil (FR)

(74) Mandataire : Ropital-Bonvarlet, Claude
Cabinet BEAU DE LOMENIE, 51, avenue
Jean-Jaurès
F-69007 Lyon (FR)

Jouve, 18, rue Saint-Denis, 75001 PARIS

## Description

La présente invention concerne le domaine du transport de charges diverses ou de pièces d'ouvrage entre des postes de travail ou d'intervention qui peuvent être d'exécution, de contrôle, d'assemblage, de montage, de vérification, etc.

La nécessité de recourir à un transfert automatique, entre des postes d'intervention successifs, s'est fait ressentir déjà depuis longtemps, dans le but de rationnaliser un processus de fabrication, d'assemblage, de montage ou de traitement et de réduire, voire supprimer, l'intervention humaine à chacune des phases opératoires d'un tel processus.

Pour atteindre cet objectif, l'art antérieur connaît plusieurs solutions qui peuvent être classées en deux familles correspondant, respectivement, aux machines-transfert à chariots liés et aux machines-transfert à chariots libres.

Dans la première famille, les machines définissent une voie de circulation établie en relation avec les différents postes d'intervention. Une telle voie de circulation sert à mouvoir et guider des chariots qui sont reliés les uns aux autres, à la manière d'une chaîne ou d'un convoyeur sans fin mû en déplacement par tout organe moteur approprié.

Une telle solution peut présenter certains avantages, dans des applications particulières où la masse des pièces ou des charges à transférer n'est pas très importante. Dans le cas contraire, une telle solution présente des inconvénients de mise en mouvement et d'arrêt, en raison de l'inertie que représente l'ensemble des chariots de transfert organisés sous la forme d'une chaîne unitaire sans fin.

Un problème connexe réside dans la difficulté de mettre en oeuvre des moyens d'indexage précis qui sont, pourtant, nécessaires au droit de chaque poste d'intervention, de manière que les exécutions élémentaires relatives à chaque phase d'arrêt, en relation avec les pièces ou les charges supportées, puissent se dérouler de la façon la plus précise possible.

On conçoit que cette exigence est difficilement compatible avec l'organisation sous la forme d'une chaîne sans fin d'un grand nombre de chariots de transfert dont les liaisons successives, nécessairement articulées, introduisent un facteur de tolérance difficilement maîtrisable.

Les transferts, dits liés, ne représentent pas, non plus, une solution technique particulièrement souple d'utilisation, étant donné qu'il n'est pas possible d'organiser, avec une telle structure, des voies de dérivation ou des secteurs d'attente et que le cycle de déplacement doit, obligatoirement, être aligné sur le temps d'exécution individuel le plus long de tous les postes d'intervention.

De tels transferts sont donc d'un rendement limité et n'offrent que peu de souplesse d'adaptation, lorsqu'il est nécessaire d'intervenir sur le déroulement du processus général ou lorsqu'il devient impératif d'utiliser un tel transfert pour l'exécution d'opérations pour lesquelles il n'a pas été initialement conçu.

Les machines-transfert de la seconde famille ont été conçues pour s'affranchir des contraintes ci-dessus. De telles machines comportent une voie de circulation définissant des glissières de guidage et de support pour des chariots libres et indépendants qui sont mûs en déplacement d'un poste d'intervention à un autre, par l'intermédiaire d'organes d'entraînement incorporés à la voie de circulation.

Une telle organisation a représenté, incontestablement, une évolution positive par rapport aux machines-transfert de la famille précédente. Toutefois, un certain nombre d'inconvénients sont encore à porter au compte de telles machines à chariots libres.

Les chariots, placés sur la voie de circulation, sont totalement pris en charge par cette dernière et sont dépendants du mode d'entraînement inclus à une telle voie. Ceci implique que la vitesse de tels chariots est limitée, en raison de l'absence d'amortissement des phénomènes d'accélération et de décélération qui doivent, cependant, être limités pour réduire les chocs, notamment à l'arrêt, soit en relation avec les postes, soit avec les chariots en contact direct touche-touche.

Les moyens de mise en circulation des différents chariots doivent, obligatoirement, être organisés sur tout le parcours de la voie de circulation, ce qui entraîne l'existence d'un nombre important d'organes en mouvement, accroissant les risques de désynchronisation, d'usure, de panne, de bruit, d'encombrement et de sécurité.

Bien que de telles machines puissent être organisées sous une forme modulaire, peu de souplesses d'adaptation sont offertes, en raison de la nécessité de mettre en oeuvre toujours les mêmes éléments constitutifs comprenant une source motrice, des organes de transmission, ainsi que des organes de guidage qui ne peuvent, généralement, pas être organisés pratiquement de façon autre que linéaire. Les configurations en plan, pouvant être conférées à la voie de circulation, sont, par conséquent, limitées ou font alors appel à des systèmes de changement de direction encore plus complexes qui sont, généralement, sources de réglages délicats et de disfonctionnements, souvent difficilement contrôlables.

Etant donné que les modules élémentaires impliquent la mise en oeuvre de l'ensemble des organes constitutifs, toute modification se traduit par un temps d'arrêt long, ainsi que par des interventions délicates ou coûteuses, notamment lorsqu'il convient de procéder à une modification d'un segment de circulation entre des postes d'intervention.

Etant donné que l'organe moteur et les éléments de transmission sont obligatoirement incorporés, chaque élément modulaire présente une épaisseur hors tout importante qui pose, parfois, des problèmes d'implantation des postes d'intervention manuelle, pour lesquels une ergonomie certaine est toujours recherchée.

Si l'existence de chariots de transfert libres et indépendants permet de s'affranchir du temps d'intervention le plus long d'un des postes de travail, pour la définition d'un cycle de fonctionnement général, en revanche, la vitesse de déplacement maximale entre postes est limitée à la capacité des organes de transmission inclus à la voie de circulation. Pour compenser cette vitesse limitée, il est, généralement, admis de faire circuler un grand nombre de chariots libres. Outre l'encombrement plus important que présente alors la voie de circulation, le nombre excédentaire de chariots provoque, inévitablement, une accumulation locale, par exemple contre un chariot en cours d'intervention au droit d'un poste. Dans un tel cas, le nombre de chariots empilés horizontalement sur la voie de circulation augmente localement, de façon très notable, le frottement avec les organes de transmission et fatigue notablement le moteur qui en assure l'entraînement en défilement. En outre, l'accumulation s'effectue contre le chariot qui se trouve immobilisé contre la butée escamotable d'un poste d'intervention. Cette butée supporte alors une poussée importante, résultant de l'accumulation des frictions élémentaires entre les organes de transmission et les différents chariots empilés. Une telle poussée est, fréquemment, la cause d'une détérioration de la structure ou de la fonction d'arrêt de la butée escamotable.

Au total donc, bien que procurant des avantages par rapport à la famille précédente, les machines-transfert à chariots libres ne sont pas encore satisfaisantes et posent, actuellement, des problèmes souvent insurmontables d'incorporation à des chaînes de fabrication entièrement automatisées, faisant intervenir des postes de travail robotisés connaissant, en raison même de leur structure, des temps d'intervention notablement différents au sein d'une même chaîne de fabrication ou de production.

Dans le but de réduire le nombre des inconvénients ci-dessus, la technique antérieure a proposé un développement des machines-transfert de la seconde famille. Il est possible de citer, à cet égard, la demande **FR-A-2585008 (85-11048)**. Dans cette publication, il est fait état d'une machine de transfert automatique comprenant des moyens de transfert constitués par des rails et des palettes ou chariots autonomes, comportant leurs propres organes d'entraînement. Les moyens d'autonomie consistent en un moteur électrique porté par la palette et dont l'alimentation est établie par des frotteurs coopérant avec des collecteurs portés par les rails.

Une telle machine comprend aussi un système de gestion centralisée de circulation des palettes par une unité centrale chargée, par des détecteurs de passage locaux, de commander à distance l'alimentation ou la coupure de l'énergie électrique appliquée aux collecteurs.

Si une telle conception apporte une amélioration par rapport aux solutions antérieures, elle n'est, en revanche, pas encore satisfaisante pour les raisons suivantes.

Le but réellement recherché est celui de conférer une flexibilité de fonctionnement à la machine, afin de la rendre apte à permettre le déroulement de processus industriels susceptibles de varier, peu ou prou. Cet objectif vise à permettre l'utilisation d'une machine de transfert pour l'exécution d'opérations diverses n'intervenant pas automatiquement toutes successivement. Avec une telle machine il serait ainsi possible d'exécuter des gammes de fabrication différentes, d'un même article ou d'articles différents et de répondre, de cette manière, avec souplesse à la demande.

Pour atteindre cet objectif, il faut pouvoir répondre à deux types de problèmes.

Le premier est celui de l'autonomie en apport fiable d'énergie motrice. La solution préconisée par la demande **FR-A-2585008** ne répond pas à cet objectif. On sait, en effet, que des frotteurs déplacés sur des collecteurs, surtout lorsqu'il s'agit de courant basse tension, provoquent un phénomène de "charbonnage" altérant rapidement les conditions de transmission de l'énergie électrique. Un déplacement fiable dans le temps, d'une palette ainsi équipée, ne peut donc être assuré.

Le second est celui de la gestion de déplacement de l'ensemble des palettes ou chariots transportant des charges de postes en postes où interviennent des opérations impliquant des durées différentes. En préconisant une gestion centralisée du déplacement d'ensemble, la demande **FR-A-2585008** ne permet pas d'atteindre une souplesse de circulation, puisque celle-ci est figée par le programme de l'unité centrale qui se contente de comptabiliser les détections de passage préprogrammées pour autoriser le déroulement d'une séquence de fonctionnement.

Il existe donc, manifestement, le besoin de pouvoir disposer d'une machine-transfert, du type à chariots libres, ne présentant pas les différents inconvénients ci-dessus, mais pouvant, au contraire, disposer d'une capacité d'adaptation automatique du temps de transfert entre deux postes d'intervention, quels que soient la distance les séparant et les temps propres d'intervention qui les caractérisent.

La présente invention vise, justement, à résoudre le problème général ainsi posé en proposant une nouvelle machine de transfert libre à chariots indépendants motorisés.

L'objet de l'invention est de proposer une nouvelle machine de transfert composée d'une structure de support et de guidage particulièrement simple et de chariots libres, automotorisés, présentant la faculté de disposer d'une réserve d'énergie embarquée qui est, partiellement, reconstituée, en cas de besoin, de façon automatique, lors de l'arrêt aux postes d'intervention. Les chaînes selon l'invention présentent, par ailleurs, la faculté de pouvoir adapter automatiquement leur vitesse de déplacement en fonction de la distance à parcourir et des conditions d'arrêt à un poste d'intervention, de manière à minimiser le temps de transfert propre, indépendamment de la configuration de la voie et des temps d'intervention à poste, par l'intermédiaire de moyens individuels de gestion de déplacement.

Un objet supplémentaire de l'invention est de proposer des moyens d'organisation d'une voie de circulation pouvant comporter des changements de direction implantés de façon rapide et efficace, sans faire intervenir une structure particulièrement complexe. Cette faculté ouvre la possibilité, encore jamais atteinte jusqu'à présent par la technique antérieure, de permettre une modification rapide et facile d'implantation et de configuration d'une voie de circulation en fonction de l'évolution d'un procédé global d'intervention devant être mis en oeuvre.

Un autre objet de l'invention est de proposer une nouvelle machine-transfert possédant une voie de circulation, du type sans fin, pouvant être aisément adaptée en configuration en fonction de multiples impératifs d'intervention.

Un autre objet de l'invention est de proposer une nouvelle machine de transfert libre permettant de réaliser une structure de prise en charge et de circulation de faible épaisseur, répondant aux caractéristiques ou aux exigences d'ergonomie, dépourvue d'organes d'entraînement mûs en défilement permanent et offrant, par conséquent, une sécurité maximale pour le personnel d'intervention.

Un objet supplémentaire de l'invention est de proposer des nouveaux moyens de réalisation d'une machine-transfert dont la voie de circulation peut être établie de façon rapide, pratique et sûre, entre des postes d'intervention pouvant être situés à des niveaux différents.

Pour atteindre les objectifs ci-dessus, la machine de transfert libre selon l'invention, du type comprenant une voie de circulation établie en relation avec des postes d'intervention pourvus chacun d'un organe d'arrêt escamotable et des chariots roulants indépendants, portés, guidés et entraînés en déplacement le long de la voie et destinés à transférer, de poste en poste, des charges qu'ils supportent, chaque chariot comportant un train de roues moteur actionné par un organe moteur électrique embarqué puisant son énergie à partir d'une batterie également embarquée, est caractérisée en ce que :

— chaque chariot comporte :

● un moteur à vitesse variable,

● une batterie rechargeable raccordée à des plots de contact,

● et un système de gestion individuelle de déplacement comprenant un circuit d'alimentation et d'asservissement du moteur contrôlé par un interrupteur actionné par un pare-choc frontal et par un contacteur monté en série avec l'interrupteur et porté par la face inférieure du chariot pour être actionné par les organes d'arrêt escamotable, ledit circuit étant, placé sous la dépendance de capteurs d'environnement,

— la voie est pourvue, en relation avec chaque poste, de contacts à lames souples raccordés à un dispositif de charge électrique destinés à coopérer avec les plots.

La **fig. 1** est une vue en plan schématique d'une machine-transfert.

La **fig. 2** est une coupe transversale prise, à plus grande échelle, selon la ligne II-II de la **fig. 1**.

La **fig. 3** est une coupe-élévation, en partie arrachée, prise selon la ligne III-III de la **fig. 1**.

La **fig. 4** est une vue de dessous, partie en coupe, prise selon la ligne IV-IV de la **fig. 3**.

Les **fig. 5** et **6** sont des coupes transversales prises, respectivement, selon les lignes V-V et VI-VI de la **fig. 3**.

Les **fig. 7** et **8** sont des coupes prises, respectivement, selon les lignes VII-VII et VIII-VIII de la **fig. 4**.

Les **fig. 9** à **11** sont des coupes partielles montrant, à plus grande échelle, des détails de réalisation.

La **fig. 12** est une coupe transversale partielle prise selon la ligne XII-XII de la **fig. 2**.

La **fig. 13** est un schéma illustratif d'un procédé d'asservissement de la vitesse de circulation des chariots de la machine-transfert selon l'invention.

La **fig. 14** est un schéma bloc illustratif des phases de fonctionnement automatique de l'objet de l'invention.

La **fig. 15** est une coupe-élévation prise selon la ligne XV-XV de la **fig. 2**.

La **fig. 16** est une vue transversale schématique montrant des variantes de réalisation de certains organes.

La **fig. 17** est une vue de dessous, analogue à la **fig. 4** illustrant une autre forme d'exécution de l'objet de l'invention.

La **fig. 18** est une élévation partielle d'un organe de la machine en relation avec la forme d'exécution, selon la **fig. 17**.

La **fig. 19** est une vue de dessous montrant la coopération des éléments, selon les **fig. 17** et **18**.

La **fig. 20** est une coupe-élévation prise selon la ligne XX-XX de la **fig. 19**.

La **fig. 21** est une vue en plan illustrant une possibilité d'implantation de la machine offerte par les moyens, selon les **fig. 17** et **18**.

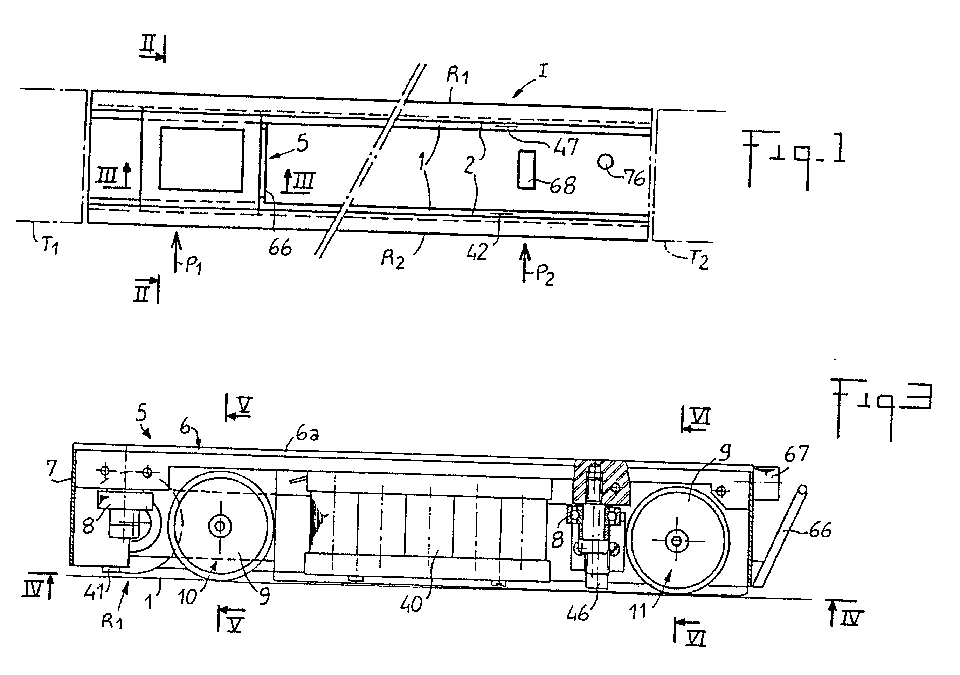

La **fig. 1** montre, de façon schématique, une ma-

chine-transfert selon l'invention, composée d'une voie de circulation I permettant de déplacer des pièces ou charges diverses entre des postes d'intervention dont deux seulement $P_1$ et $P_2$, sont schématisés.

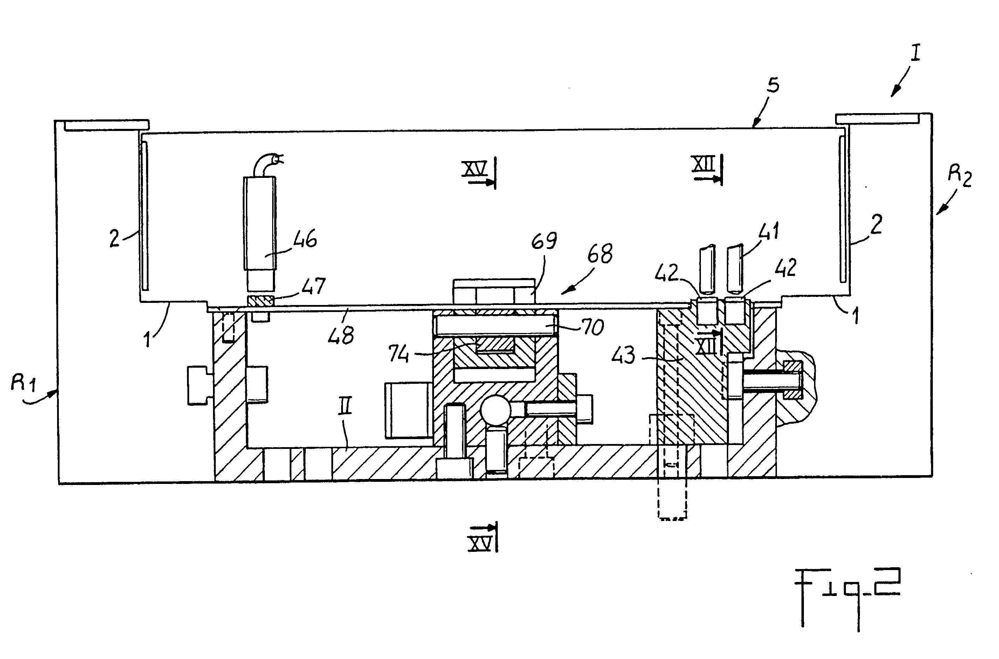

La voie de circulation I s'étend entre une table $T_1$ de chargement des pièces à transporter et une table $T_2$ de déchargement de ces pièces. La voie de circulation I est principalement constituée (**fig. 2**) par deux rails parallèles $R_1$ et $R_2$ montés sur une structure porteuse II. Les rails $R_1$ et $R_2$, par exemple constitués par des profilés tubulaires, offrent, par leurs faces internes, des surfaces de roulement **1** et des surfaces latérales de guidage **2** respectivement horizontales et verticales en section droite.

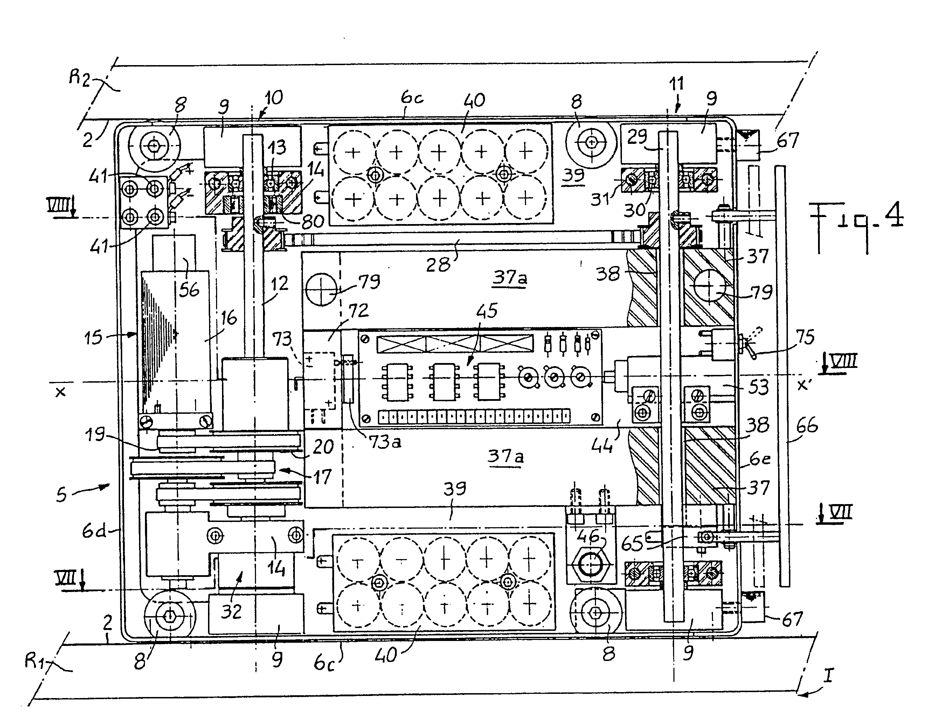

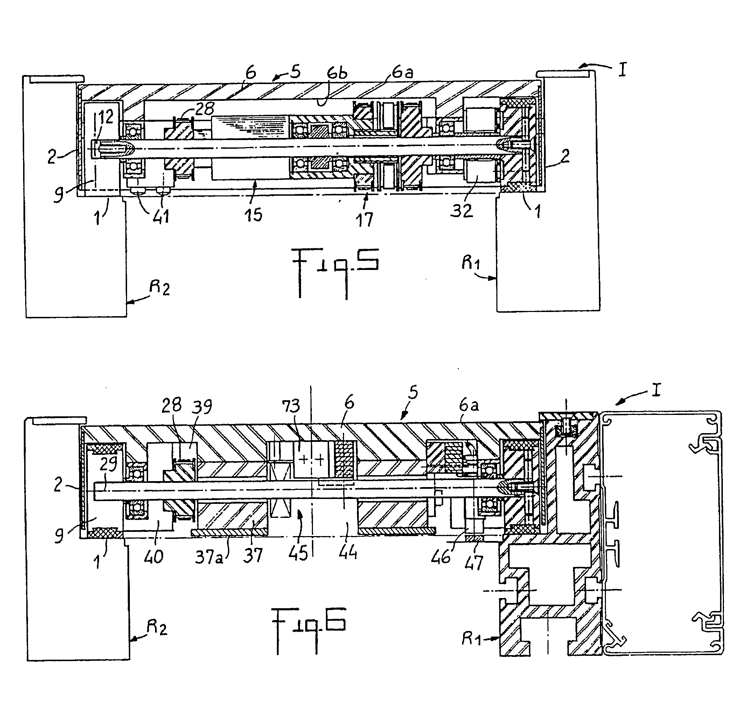

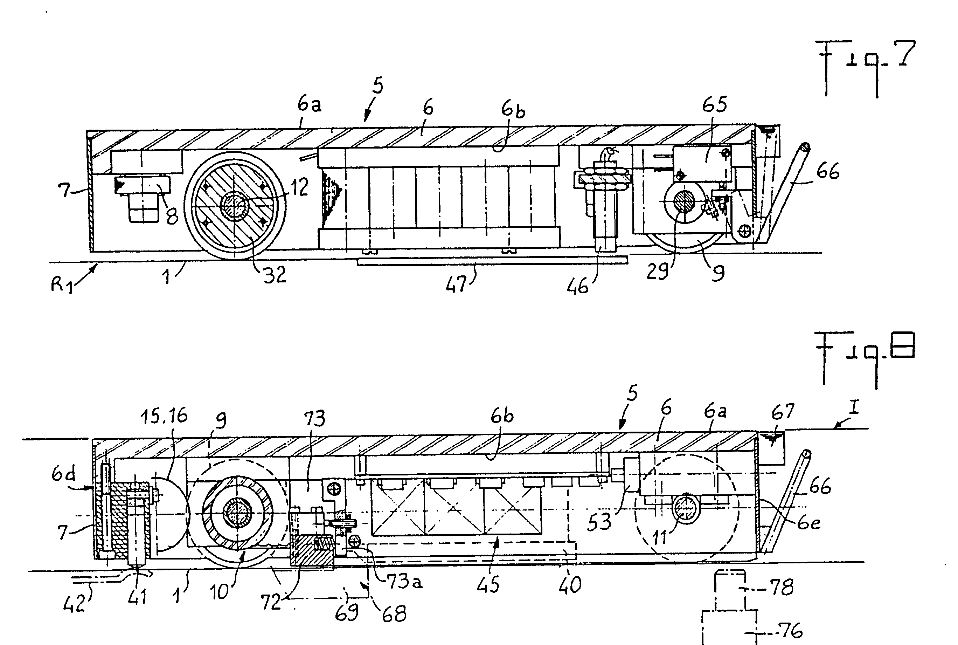

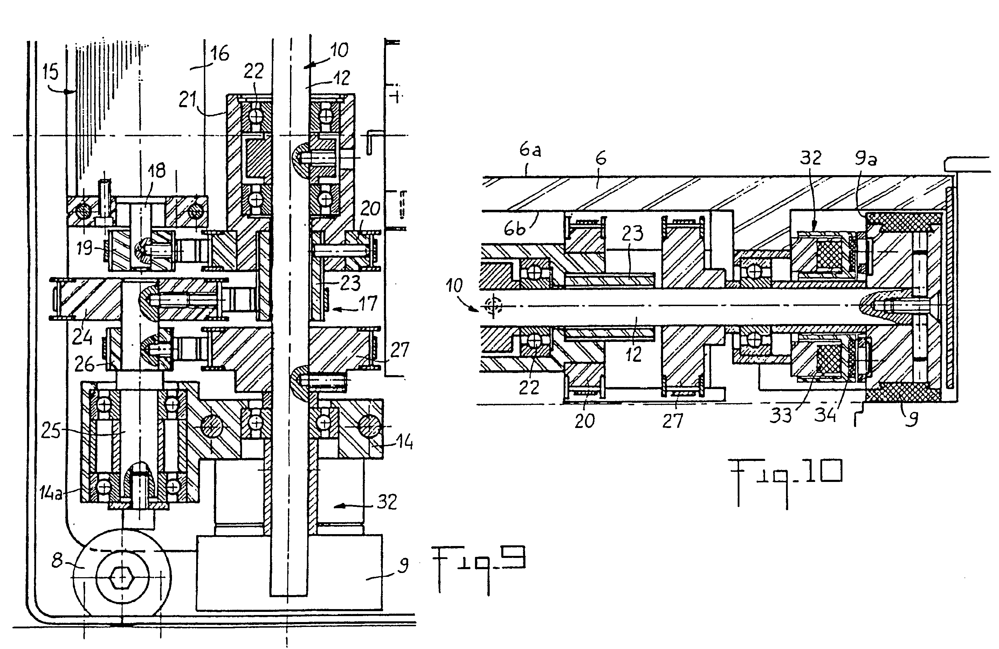

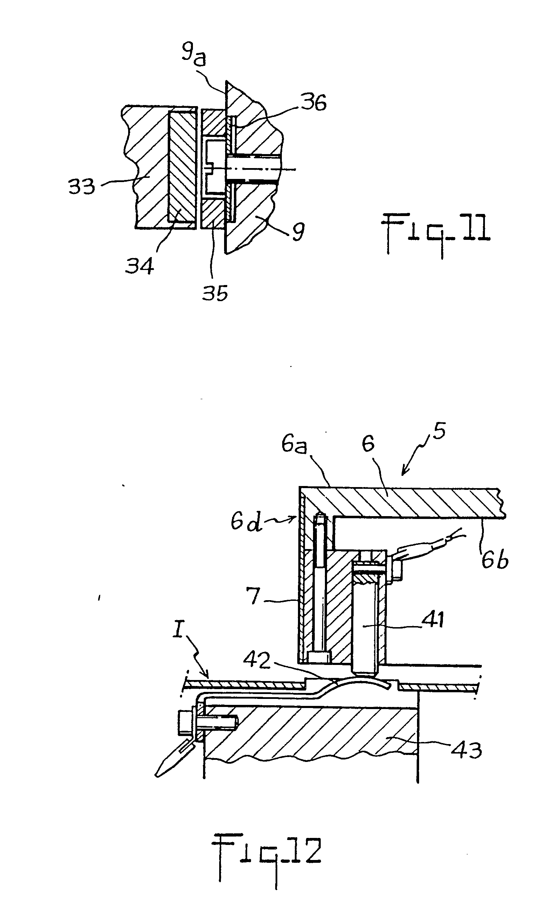

Les surfaces **1** et **2** sont destinées à assurer le support et le guidage d'un chariot **5** motorisé comprenant, tel que cela apparaît aux **fig. 3 à 8**, une platine **6** habituellement pourvue, sur sa face supérieure **6a**, de moyens permettant d'assurer l'adaptation amovible et centrée de pièces ou de charges. Ces moyens, ordinaires dans le cadre d'une machine-transfert, ne sont pas représentés aux dessins, car ils dépendent, essentiellement, de l'application visée et sont connus de l'homme de l'art.

La platine **6**, de préférence bordée à sa périphérie par une jupe ou un carénage **7**, porte, sur sa face inférieure **6b**, des galets **8** faisant légèrement saillie par rapport aux faces longitudinales **6c** pour coopérer avec les surfaces de guidage **2**. La face **6b** supporte, par ailleurs, des organes de roulement **9** destinés à coopérer avec les surfaces **1**. Les organes de roulement **9** sont, de préférence, constitués par des roues à bandage adhérant rapporté et sont organisés sous la forme d'un train arrière **10** et d'un train avant **11**. Le train arrière **10** est constitué par deux roues extrêmes **9** adaptées sur un arbre **12** monté par des roulements **13** dans des paliers **14** de la platine **6**. L'arbre **12** est motorisé par l'intermédiaire d'un groupe **15** moteur et, de préférence aussi, réducteur. Le groupe **15** comprend un moteur **16** à vitesse variable monté sur la face inférieure **6b** pour s'étendre parallèlement à l'arbre **12**. Le groupe **15** comprend, par ailleurs, un réducteur **17** interposé entre l'arbre de sortie **18** du moteur **16** et l'arbre **12**. Le réducteur **17** est, par exemple, de type à trois étages faisant intervenir, pour chacun d'eux, de préférence, une transmission par courroie crantée. Le mode de transmission par courroie crantée est, de préférence, choisi pour permettre la transmission d'un couple élevé, à grande vitesse et à faible bruit.

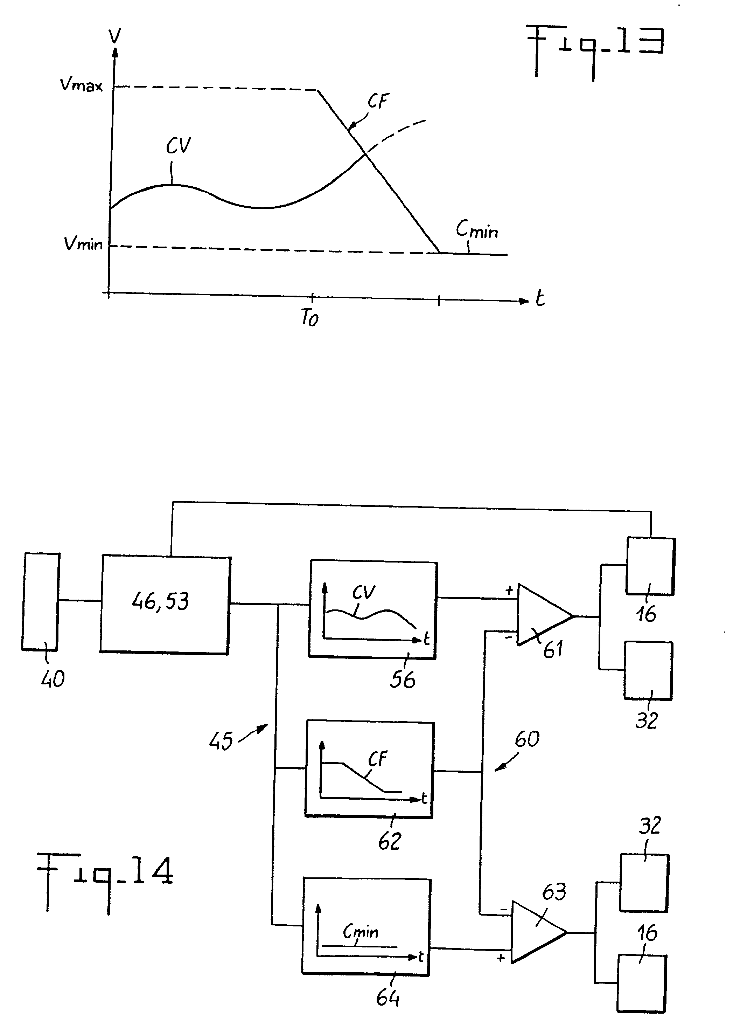

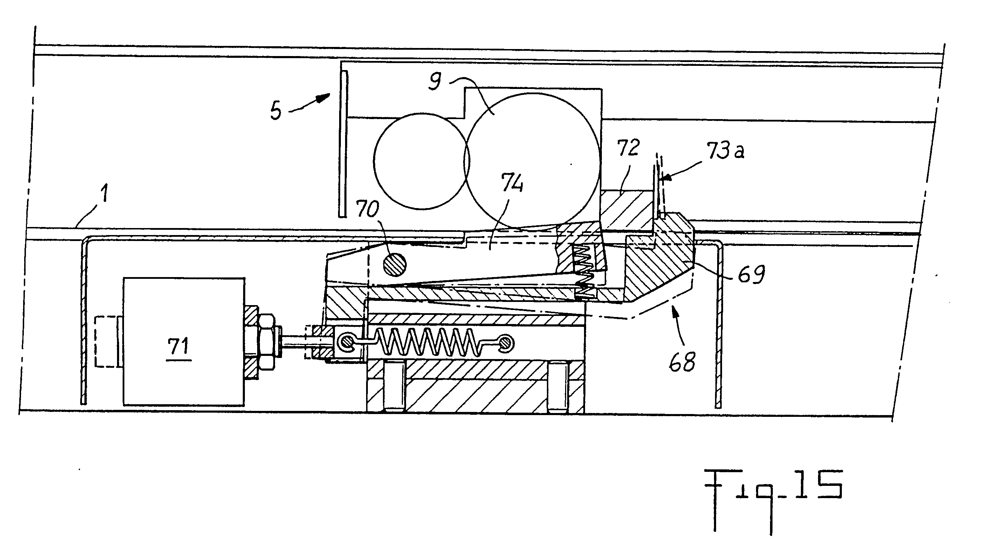

La **fig. 9** met en évidence que le réducteur **17** est organisé, de manière que son premier étage de réduction soit constitué par un pignon de sortie **19** adapté sur l'arbre **18** et par un pignon **20** mené monté sur un arbre intermédiaire **21**. Dans une réalisation préférée, l'arbre **21** est du type tubulaire et se trouve porté, par l'intermédiaire de roulements **22**, concentriquement et sur l'arbre moteur **12**. L'arbre tubulaire **21** porte un pignon **23** menant pour le deuxième étage de réduction constitué par ce pignon **23** et un pignon **24** adapté sur un arbre intermédiaire **25** parallèle à l'arbre **12** et coaxial, par exemple, à l'arbre de sortie **18**. L'arbre intermédiaire **25** est porté par un palier double **14a** délimité par le palier **14** correspondant. L'arbre intermédiaire **25** porte un pignon **26** constitutif du troisième étage de réduction et coopérant avec un pignon complémentaire **27** calé, angulairement et axialement, sur l'arbre moteur **12** qu'il est chargé d'entraîner en rotation propre.

Dans la forme de réalisation illustrée aux dessins, l'arbre moteur **12** du train **10** est relié, par une transmission **28** de préférence également du type à courroie, au train **11** qui est constitué par deux roues **9** adaptées sur un arbre **29** monté, par des roulements **30**, dans des paliers **31** de la platine **6**, pour s'étendre parallèlement à l'arbre **12**.

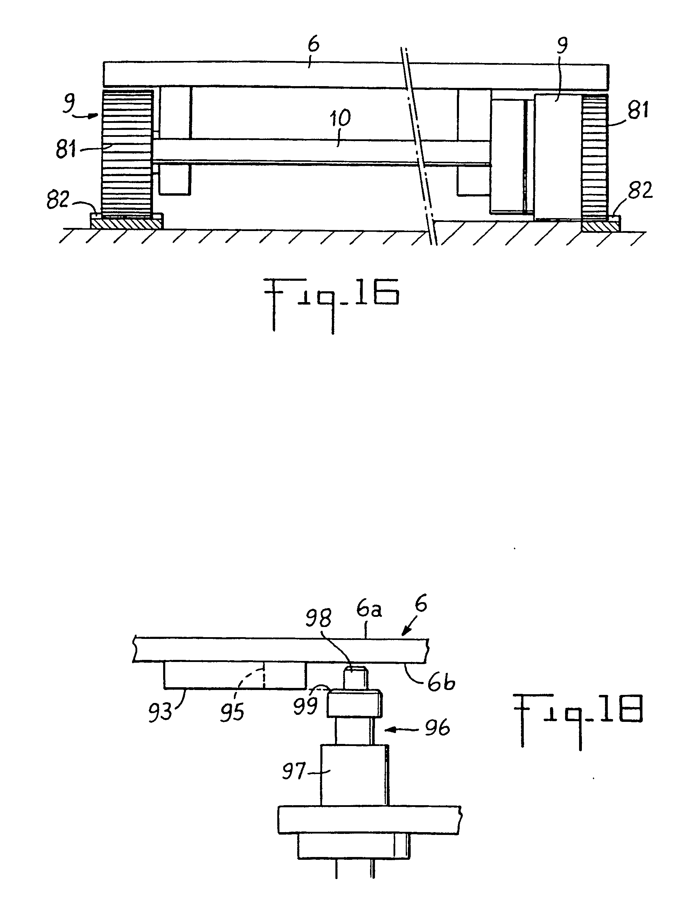

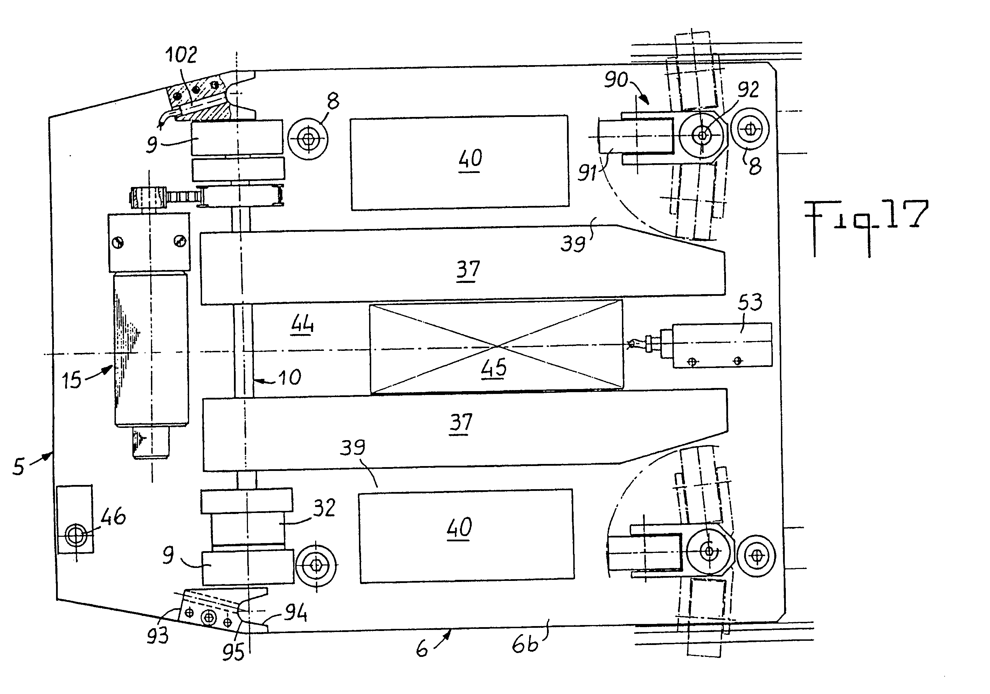

Le train arrière motorisé **10** est, de préférence, associé à un organe de freinage **32**, du type électromécanique, plus particulièrement illustré par les **fig. 10** et **11**. L'organe de freinage **32** comprend une bobine magnétique annulaire **33** montée sur le palier **14** pour être disposée concentriquement à l'arbre **12**, à proximité d'une roue **9**. La bobine annulaire **33** possède, sur sa face en vis-à-vis de la face annulaire **9a** de la roue **9**, un disque de friction annulaire **34**, de préférence monté de façon amovible sur la bobine **33**. Le disque de friction **34** est orienté en regard de la face **9a** qui supporte un disque annulaire **35**, en matière magnétique, adapté par l'intermédiaire de languettes **36** déformables élastiquement, de manière à être immobilisé angulairement avec faculté de déplacement latéral par rapport à la face **9a**. Le montage de la bobine électro-magnétique est effectué pour laisser subsister un faible intervalle entre le disque de friction **34** et le disque **35** occupant sa position stable de repos contre la face **9a**.

La face inférieure **6b** de la platine **6** est pourvue, à partir de sa face frontale **6e**, de deux membrures de raidissement **37** formées par ou rapportées sur la platine et pourvues de semelles **37a**. Les membrures **37** s'étendent parallèlement entre elles et de part et d'autre d'un plan médian longitudinal de symétrie x-x', depuis la face frontale **6e** jusqu'à distance de l'arbre **12**. Les membrures **37** sont, en conséquence, traversées par l'arbre **29** du train avant **11** pour lequel elles définissent des passages coaxiaux **38**.

Les membrures **37** délimitent, à partir de la face inférieure **6b**, deux compartiments latéraux **39** qui sont occupés, entre les trains **10** et **11**, par deux batteries **40** d'accumulateurs rechargeables constituant une source d'énergie électrique embarquée pour l'alimentation du moteur **16**. Les batteries **40** sont raccordées électriquement à au moins deux plots de contact **41** portés par la face inférieure **6b**, pour s'étendre en direction du plan passant par les surfaces de roulement **1**.

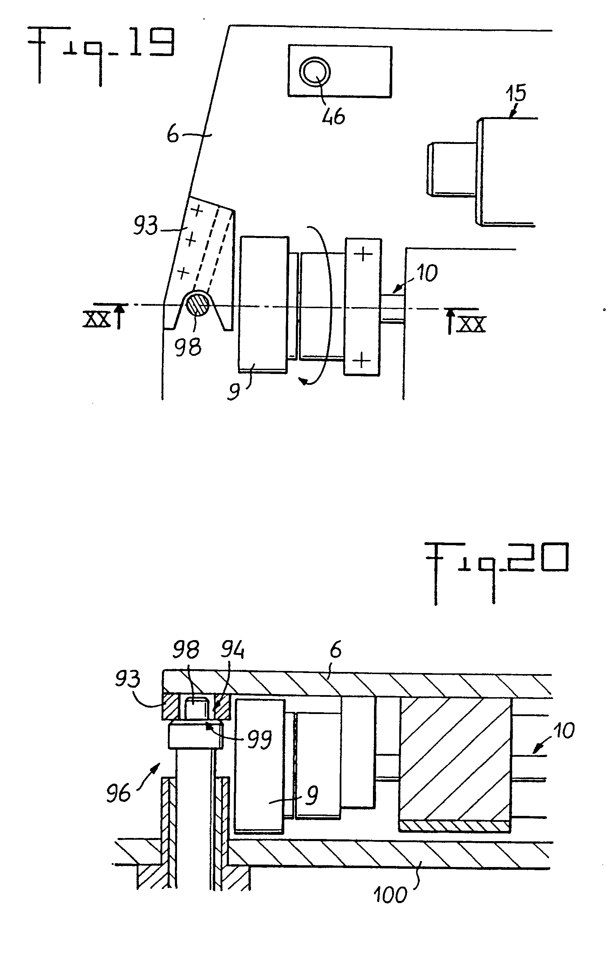

Les plots **41** sont, de préférence, portés par la platine à proximité de la face arrière **6d** et du côté opposé au réducteur **17**. Les plots **41** sont destinés, comme cela est illustré par les **fig. 2** et **12**, à coopérer avec des contacts à lames souples **42** portés par un bloc isolant **43** adapté à proximité du rail $R_2$. Les contacts à lames souples **42** sont raccordés à un transformateur électrique de charge pour assurer la recharge des batteries d'accumulateurs **40** chaque fois que le chariot **5** stationne à un poste **P**. Les contacts à lames souples **42** font donc partie, dans ce cas, de l'équipement d'un poste **P**.

Les membrures **37** délimitent entre elles un compartiment central **44**, de préférence, réservé au montage et à la protection d'un circuit d'asservissement électronique **45** chargé de piloter, à partir de la source d'énergie **40**, l'alimentation en vitesse rapide ou en vitesse lente du moteur **16**, ainsi que l'excitation ou la désexcitation du frein électro-mécanique **32**. Pour assumer cette fonction, le circuit d'asservissement **45** comprend, tout d'abord, un capteur inductif **46** porté par la platine **6** pour être dirigé vers le plan général des surfaces de roulement **1**. Le capteur inductif est chargé de détecter la présence de barrettes **47** portées, soit par les surfaces de roulement, soit, de préférence, par une plaque de fermeture **48** portée par la structure II (**fig. 2**). Chaque barrette **47** représente un élément d'information matérialisant, par anticipation, l'existence ou la situation sur ou à proximité de la voie I d'un point singulier pour lequel le chariot **5** doit adopter une vitesse de déplacement lente. Dans le cas présent, la voie I de la machine-transfert comporte une barrette **47** située en amont de chaque poste **P**.

Le circuit **45** comprend aussi un détecteur télémétrique de présence **53**, branché en parallèle avec le capteur **46** et disposé dans le compartiment central **44**, pour affleurer la face frontale **6e**. Le détecteur télémétrique **53** peut être de tout type convenable pour apprécier l'existence ou la présence d'un obstacle, tel qu'un chariot **5** occupant la voie I en aval.

Le circuit d'asservissement **45** comprend, par ailleurs, un capteur **56** de mesure de la vitesse de déplacement du chariot le long de la voie I. Un tel capteur peut être constitué par une génératrice tachymétrique ou par un codeur accouplé au moteur électrique **16**.

Le circuit d'asservissement **45** est organisé, dans son principe fonctionnel, de manière à piloter l'alimentation du moteur électrique **16** en grande vitesse, en l'absence d'information émise soit par le capteur **46**, soit par le détecteur télémétrique **53**. Par contre, dès que le capteur **46** ou le détecteur **53** émet un signal de présence, le circuit d'asservissement **45** est chargé de piloter la motorisation du chariot, de manière à imposer un ralentissement de la vitesse maximale $V_{max}$ à la vitesse minimale $V_{min}$ procurée par le moteur **16**.

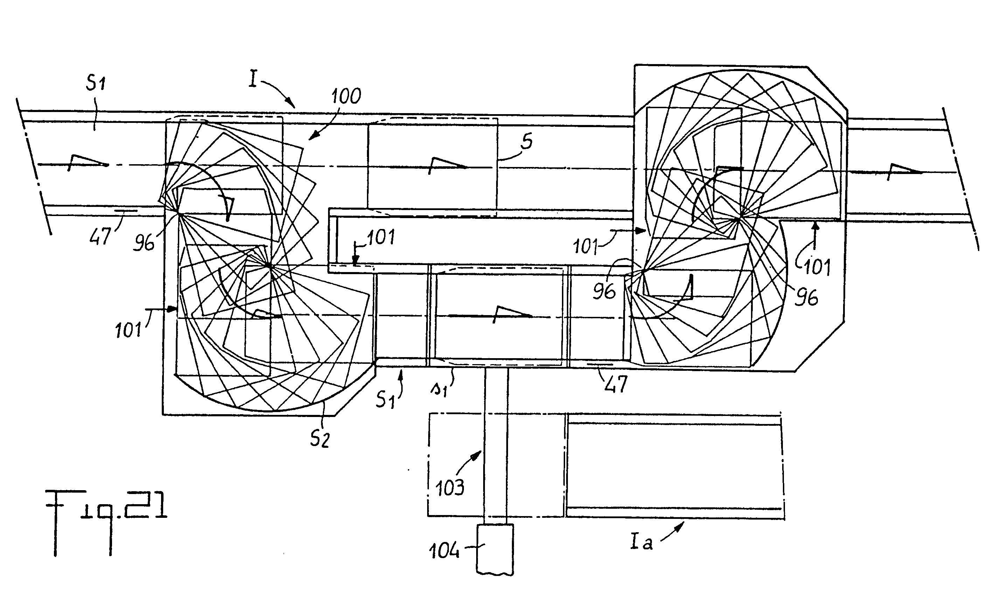

La **fig. 13** fait apparaître un diagramme fonctionnel auquel le circuit d'asservissement **45** doit répondre. Le circuit **45** est conçu, de manière à générer, dès l'apparition à un temps $T_0$ d'un signal de présence fourni par le capteur **46** ou le détecteur **53**, un signal **CF** représentatif d'une courbe de freinage acceptable pour faire passer la vitesse d'un chariot chargé, de la valeur $V_{max}$ à la valeur $V_{min}$. Le signal **CF** est, de préférence, une courbe linéaire.

Le circuit **45** est organisé de manière à prendre en compte un signal **CV** image de la variation de la courbe de vitesse du chariot **5**. Ce signal **CV** est un signal analogique fourni par la génératrice tachymétrique **56**.

Le circuit **45** est organisé pour comparer le signal **CV** avec le signal **CF** et pour piloter, dès que la valeur du signal **CV** dépasse le signal **CF**, l'arrêt de l'alimentation du moteur **16** et l'excitation du frein **32**. L'intervention du circuit **45** est donc dépendante de la courbe de vitesse du chariot **5** pour déclencher le freinage de ce dernier juste au moment opportun et laisser subsister une vitesse de déplacement la plus grande possible pendant un temps le plus long possible.

L'organisation du circuit **45** est aussi prévue pour rétablir l'alimentation du moteur **16** en petite vitesse dès que la vitesse minimale prédéterminée du chariot a été atteinte par le freinage.

Pour assumer les fonctions ci-dessus, l'organisation du circuit **45** peut faire intervenir, comme illustré par la **fig. 14**, un comparateur **60** à deux niveaux comprenant un premier étage **61** recevant en entrée le signal analogique **CV** représentatif de la courbe de vitesse, émis par la génératrice tachymétrique **56**. L'étage **61** reçoit, par ailleurs, le signal analogique **CF** représentatif de la courbe de freinage **CF**, émis par un module de calcul électronique **62** appartenant au circuit **45**. L'étage de comparaison **61** est chargé de piloter, d'une part, l'arrêt d'alimentation du moteur **16** et, d'autre part, l'excitation du frein **32**.

Le comparateur **60** possède un second étage **63** recevant, d'une part, le signal **CF** émis par le module **62** et un signal $C_{min}$ émis par un module **64** et correspondant à une valeur consigne de réglage petite vitesse. La sortie du comparateur **63** est reliée à l'alimentation du moteur électrique **16** pour piloter cette dernière en petite vitesse et à la bobine du frein **32** pour la désexciter.

Le circuit d'asservissement **45** dote le chariot d'une autonomie individuelle de gestion de sa vitesse de déplacement sur la voie de circulation I. En effet, en l'absence d'information émise par le capteur **46** et/ou le détecteur **53**, le moteur **16** est alimenté en grande vitesse et puise son énergie dans la source **40**. Le chariot est alors entraîné à vitesse maximale sur la voie I pour se déplacer entre deux postes successifs, $P_1$ à $P_2$ par exemple.

Lorsque, par exemple, la cellule de détection télémétrique **53** constate la présence d'un obstacle sur la voie I, tel que l'existence d'un chariot précédent, le circuit **51** calcule le moment le plus adéquat pour déclencher la phase de ralentissement, afin d'amener le chariot à la vitesse d'avancement minimale à proximité de l'obstacle. La fonction du circuit **45** est donc de déterminer le moment optimal de déclenchement de la phase de ralentissement, de manière à laisser subsister une vitesse d'avance rapide sur le plus grand trajet possible, en vue de minimiser les temps de déplacement du chariot à vitesse réduite.

Dès que le signal de détection a été fourni par le détecteur **53**, le circuit **45** génère le signal **CF** image de la courbe théorique de ralentissement qu'il convient d'adopter entre la vitesse maximale $V_{max}$ et la vitesse minimale $V_{min}$ du chariot. Simultanément, le circuit d'asservissement **45** prend en charge le signal analogique **CV** délivré par le capteur de mesure de vitesse **56** et représentant l'image de la vitesse propre de déplacement du chariot. Lorsque ce signal dépasse la valeur de la courbe théorique de ralentissement, le circuit d'asservissement **45** coupe l'alimentation du moteur électrique **16** et déclenche le fonctionnement du frein **32**. Ces deux actions interviennent, en conséquence, avec un retard variable par rapport à l'origine $T_0$ du signal de détection, un tel retard étant, essentiellement, dépendant de la vitesse acquise par le chariot au moment de l'émission du signal de détection d'obstacle.

La vitesse du chariot est freinée par le frein **32** jusqu'au moment où la courbe théorique de freinage **CF**, ou encore une détection de vitesse réelle qui pourrait être fournie par le capteur **56**, génère un signal correspondant au signal de consigne $C_{min}$. Lorsque cette coïncidence intervient, le comparateur **60** rétablit l'alimentation petite vitesse du moteur **16** et désexcite le frein **32** simultanément.

Le chariot poursuit alors sa progression dans le même sens, à petite vitesse, afin d'être amené contre l'obstacle détecté.

Un fonctionnement identique intervient dès que le capteur **46** est amené en présence d'une barrette **47** matérialisant une situation particulière et, dans l'exemple retenu, la présence prochaine d'un poste d'intervention **P** et définissant par sa longueur la durée de ralentissement de $V_{max}$ à $V_{min}$.

Il convient de noter que dans les deux cas ci-dessus intervient un cycle de ralentissement aboutissant à l'établissement de la vitesse minimale $V_{min}$. Dans la mesure où le capteur **46** et le détecteur **53** n'émettraient plus de signaux, le circuit **45** rétablirait l'alimentation en vitesse maximale $V_{max}$ que cette éventualité se produise pendant ou après le cycle de ralentissement.

Dans les deux cas de fonctionnement évoqués, il est nécessaire de prévoir des moyens pour couper l'alimentation du moteur **16** et assurer l'arrêt en position stable du chariot **5**.

Pour répondre au premier cas, correspondant à l'existence d'un obstacle sur la voie I, tel que la présence d'un autre chariot, il est prévu de munir le chariot d'un interrupteur de contact **65** placé sur le circuit d'alimentation générale du chariot. L'interrupteur de contact **65** est, de préférence, actionné par une barre pare-choc articulée **66** portée par la face frontale **6e**, entre des tampons de butée **67** entre lesquels elle peut s'escamoter par contact. Dès que l'interrupteur de contact **65** est libéré et qu'aucune autre information n'est émise par le capteur **46** ou la cellule **53**, le circuit **45** rétablit l'alimentation grande vitesse du moteur **16**.

Pour répondre au second cas, chaque poste **P** de la machine-transfert est pourvu (**fig. 2** et **15**) d'un moyen d'arrêt **68** comprenant un taquet de butée **69** monté par un axe de pivotement **70** sur la structure II. Le taquet **69** fait en permanence saillie par rapport au plan des surfaces **1** mais peut être escamoté par un organe de commande **71** tel qu'un électro-aimant. Le taquet est prévu pour constituer une butée par rapport à la structure du chariot et, notamment, une traverse **72** joignant les membrures **37**. La traverse **72** porte un contacteur **73**, associé à un levier **73a**, destiné à être actionné par le taquet **69**. Le contacteur **73** est disposé sur le circuit général d'alimentation du chariot en série avec l'interrupteur **65**. De préférence, le taquet **69** est associé à une rampe **74** escamotable élastiquement dans le sens de progression et formant une contrebutée destinée à prendre appui derrière la traverse **72** pour immobiliser le chariot.

L'alimentation de l'électro-aimant est placée sous la dépendance du déroulement du cycle de travail du poste. La fin de ce cycle commande l'escamotage du taquet libérant le contacteur **73** qui rétablit l'alimentation grande vitesse du moteur **16** en l'absence d'information délivrée par le capteur **46** ou par la cellule **53**.

La **fig. 4** montre que le circuit général d'alimentation peut aussi comporter un interrupteur général **75** monté en série avec l'interrupteur de contact **65** et le contacteur **73**.

Ainsi que cela ressort de ce qui précède, la machine-transfert comprend une voie de circulation I pourvue de chariots motorisés, indépendants, dotés de moyens de détection de l'environnement de circulation et de moyens d'asservissement de leur vitesse de déplacement.

Il devient ainsi possible de réaliser une machine-transfert comprenant une voie I dont la structure est limitée à la définition des surfaces de roulement **1** et des surfaces de guidage latérales **2**. Une telle voie de circulation peut ainsi être réalisée de façon simple, sous un faible encombrement, notamment en épaisseur, tout en offrant de grandes possibilités d'adaptation et de montage, en raison de l'absence d'organes intermédiaires ou annexes de motorisation ou de transfert, comme cela est le cas dans les machines traditionnelles à chariots libres.

Il devient, également, possible de réaliser une machine-transfert possédant un rendement exactement adapté aux opérations à effectuer au droit des postes d'intervention, tout en présentant une adaptation automatique au processus d'intervention éventuellement évolutif. En effet, dans tous les cas, chaque chariot peut adapter sa propre vitesse de déplacement de façon optimale entre un premier poste d'intervention qu'il quitte et, soit la présence d'un obstacle, soit l'arrivée à un poste d'intervention suivant.

Une telle machine-transfert, faisant application de l'invention, comprend, en conséquence, une voie I, du type décrit précédemment, des moyens 47 de signalement à distance des différents postes P, des moyens d'arrêt 68 en relation avec chacun des postes P et aussi des moyens de rechargement électrique et des chariots autonomes motorisés dont la source d'énergie est rechargée par la coopération entre les plots 41 et les contacts à lames souples 42. De cette manière, une réserve d'énergie suffisante est toujours disponible à bord pour assurer l'autonomie de déplacement, même à vitesse maximale, du chariot entre deux postes successifs.

Outre les avantages de simplicité de construction de la voie I et de souplesse d'utilisation découlant de l'auto-adaptation de la vitesse de déplacement des chariots, il convient de noter que le fonctionnement de la machine permet le déroulement précis et reproductible des séquences d'intervention de chaque poste. En effet, chaque chariot est immobilisé effectivement en un état stable désalimenté ce qui, d'une part, économise l'énergie de bord et, d'autre part, supprime toute sollicitation d'entraînement et de frottement, comme généralement cela est le cas dans les machines traditionnelles. Le taquet de butée 69 ne subit, de cette façon, aucune sollicitation susceptible de le détériorer, qu'il assure l'arrêt d'un chariot à poste ou de plusieurs venus en amont s'empiler horizontalement sur celui en cours d'intervention. En effet, dans un tel cas, tous les chariots empilés sont désactivés par la commande des interrupteurs de contact 65 par les barres pare-choc 66.

Pour accroître la précision d'arrêt à poste, la machine-transfert peut également comprendre au droit de chaque poste P, comme cela est schématisé en traits mixtes à la **fig. 8**, des moyens 76 d'indexage prévus pour immobiliser précisément chaque chariot en relation avec des organes d'intervention propres au poste. Les moyens 76 peuvent comporter un organe moteur 77, tel qu'un vérin, commandant l'extension d'une broche 78 destinée à pénétrer dans un logement 79 offert par l'une au moins des membrures 37.

Il pourrait être envisagé de construire une machine-transfert comprenant une voie de circulation I dépourvue des barrettes 47 et des chariots motorisés à une seule vitesse faible de déplacement et démunis de frein. Dans un tel cas, l'asservissement de déplacement ne serait plus dépendant d'un circuit 45 mais serait assuré, en tout ou rien, par l'interrupteur de contact 65 et par le contacteur 73. Une version intermédiaire pourrait aussi consister en l'adjonction du capteur 46 apte à coopérer avec les barrettes 47.

Dans les cas de construction ci-dessus, les chariots motorisés pourraient être munis d'une roue libre 80 servant d'anti-recul interposé, comme montré à la **fig. 4**, entre l'arbre 12 et un palier 14.

La mise en oeuvre d'un chariot motorisé offre la possibilité supplémentaire de réaliser des machines-transfert comportant des voies de circulation susceptibles d'offrir une déclivité positive ou négative. En effet, il peut être prévu, comme cela est illustré par la **fig. 16**, de faire comporter aux roues 9 une denture 81 soit totale, comme montré en partie gauche, soit partielle, comme montré en partie droite. Chaque denture 81 peut coopérer avec une crémaillère 82 présentée par les surfaces 1 ou rapportée latéralement à ces dernières. L'association des dentures 81 et des crémaillères 82 permet, en outre, de conférer de meilleures caractéristiques d'accélération et de décélération aux chariots.

Les **fig. 17** et **18** montrent une autre forme d'exécution selon laquelle le chariot est conçu de manière à comporter un train arrière motorisé 10 et un train avant 90 constitué par deux roues 91 montées folles sur des pivots 92 s'étendant verticalement, à partir de la face 6b de la platine 6.

Dans un tel cas, le chariot comporte, également, sur sa face inférieure 6b et à proximité des bords longitudinaux, des taquets d'accostage 93 offrant chacun, en direction de la face frontale 6e, un vé d'accostage 94 dont le fond 95, de forme semi-circulaire, possède un centre situé sur l'axe géométrique de l'arbre 12 du train arrière motorisé 10.

Chaque taquet d'accostage 93 est destiné à coopérer avec un doigt de pivotement 96 porté par la voie I, en alignement avec la trajectoire suivie par le taquet. Le doigt 96, actionné en saillie par un vérin 97, comporte un pion cylindrique 98 apte à s'engager dans le vé 94 pour s'emboîter dans le fond 95 lors de l'avancement à petite vitesse du chariot. Le pion 98 s'élève à partir d'une portée tronconique 99 qui est située, en état d'extension du doigt 96, à un niveau supérieur à celui de la face inférieure du taquet d'accostage 93.

Ainsi, comme cela ressort des **fig. 19** et **20**, la progression à petite vitesse du chariot, lorsqu'un doigt 96 est en extension, amène le vé 94 correspondant à emboîter le pion 98, alors que, simultanément, la face inférieure du taquet d'accostage 93 gravit la portée tronconique 99. Le chariot est ainsi soulevé latéralement, d'une mesure faible mais suffisante pour que la roue 9 correspondante du train arrière motorisé 10, soit élevée par rapport au plan de roulement de la surface 1, alors que la seconde roue 9, du même train, porte toujours sur la surface 1 correspondante. Il en résulte, par conséquent, un couple de pivotement généré par l'action motrice de la roue **9** extérieure au doigt de pivotement **96** qui constitue un centre de pivotement de l'ensemble du chariot sous l'action de la roue **9** extérieure. Le pivotement du chariot peut intervenir librement, en raison de la présence des roues folles **91** constitutives du train avant, dans la mesure où la voie I leur offre un plan de roulement et de support continu. Ainsi, en prévoyant, comme cela est illustré à la **fig. 21**, l'établissement en aval d'un doigt **96** d'une aire de pivotement **100**, il devient possible de réaliser une machine-transfert comportant une voie de circulation incluant des segments de circulation rectilignes $S_1$ et des segments de pivotement $S_2$ pouvant s'établir sur une valeur angulaire comprise entre quelques degrés et 180°. En effet, tant que le doigt de pivotement **96** fait saillie, le chariot qui l'a accosté par l'un de ses taquets **93**, tourne autour du pion à faible vitesse sous l'action de la roue motrice extérieure, en étant supporté par la surface plane de l'aire de pivotement **100**. Lorsque le doigt **96** est escamoté, les deux roues **9** du train arrière motorisé reprennent contact avec le plan de roulement et propulsent le chariot en déplacement rectiligne selon une nouvelle direction. L'escamotage du doigt **96** peut, par exemple, être commandé par un capteur de proximité **101** placé sur la trajectoire de pivotement du chariot.

La **fig. 21** montre que, par pivotements successifs, il devient possible de réaliser une machine-transfert comportant, de place en place ou aux emplacements choisis et, éventuellement, variables, des embranchements, des voies de dérivation parallèles ou toute autre conformation de circulation jusqu'à présent interdites dans les machines traditionnelles. L'implantation d'aires de pivotement **100** peut, en outre, être effectuée facilement et rapidement, étant donné l'absence d'organes d'entraînement devant prendre en compte le déplacement des chariots.

Chaque aire de pivotement est, de préférence, associée en amont à une barrette **47** détectée par le capteur **46** pour enclencher, par le circuit **45**, le régime de ralentissement favorable à un accostage du pion **96**. Le maintien d'une vitesse de déplacement, réduite pendant la phase de pivotement, est assuré par un signal transmis au circuit d'asservissement par un capteur de présence **102** incorporé aux taquets d'accostage. Lorsque le pion s'escamote en fin de pivotement, le signal d'accostage disparaît et le circuit **45** rétablit l'alimentation à la vitesse maximale du moteur **16**.

La **fig. 21** montre, également, que la simplicité de construction de la voie I permet de prévoir l'existence de module d'aiguillage **103** comprenant, par exemple, un segment rectiligne $s_1$ intermédiaire pouvant être disposé par un actionneur **104** soit en alignement dans un segment $S_1$ qu'il contribue à délimiter, soit en regard d'une voie de dérivation $I_a$. Un tel module comprend, par lui-même, un taquet d'arrêt et le segment $S_1$, auquel il est associé, est alors pourvu en amont, lui aussi, d'un tel taquet d'arrêt. Des combinaisons différentes d'aiguillage peuvent être envisagées en ne faisant intervenir, à chaque fois, qu'une structure porteuse de guidage et qu'un actionneur à double sens de fonctionnement.

Le fonctionnement d'un moyen d'aiguillage ou de déviation tel qu'un pion **96** ou un module **103** peut être placé sous la dépendance d'un compteur de passage, d'un lecteur de code placé sur la voie et qui détecte les chariots ou les charges qu'ils supportent.

Une voie de circulation d'une machine, selon l'invention, peut aussi comporter un segment pivotant sur un axe horizontal, lorsqu'il convient d'ouvrir, temporairement, un passage à travers la voie.

## Revendications

1. Machine de transfert libre du type comprenant une voie de circulation (I) établie en relation avec des postes d'intervention (P) pourvus chacun d'un organe d'arrêt escamotable et des chariots roulants (5) indépendants, portés, guidés et entraînés en déplacement le long de la voie et destinés à transférer, de poste en poste, des charges qu'ils supportent, chaque chariot comportant un train de roues moteur actionné par un organe moteur électrique embarqué puisant son énergie à partir d'une batterie également embarquée, caractérisée en ce que :
— chaque chariot comporte :
• un moteur (15) à vitesse variable,
• une batterie rechargeable raccordée à des plots de contact (41),
• et un système de gestion individuelle de déplacement comprenant un circuit (45) d'alimentation et d'asservissement du moteur contrôlé par un interrupteur (65) actionné par un pare-choc frontal (66) et par un contacteur (73) monté en série avec l'interrupteur et porté par la face inférieure du chariot pour être actionné par les organes d'arrêt escamotable, ledit circuit étant, placé sous la dépendance de capteurs d'environnement (46, 53),
— la voie (I) est pourvue, en relation avec chaque poste, de contacts à lames souples (42) raccordés à un dispositif de charge électrique destinés à coopérer avec les plots (41).

2. Machine de transfert selon la revendication 1, caractérisée en ce qu'elle comprend des chariots (5) pourvus de deux trains de roulement (10 et 11) dont l'un, au moins, est muni d'un dispositif à roue libre (80).

3. Machine de transfert selon la revendication 1, caractérisée en ce que les capteurs d'environnement comprennent un capteur inductif (46) porté par chaque chariot et des barrettes métalliques (47) adaptées par des supports (48) sur la voie de circulation en amont de points singuliers de ladite voie.

4. Machine de transfert selon les revendications 1 et 3, caractérisée en ce que les capteurs d'environnement comprennent, en outre, un détecteur télémétrique (53) de présence situé sur la face frontale (6e) de chaque chariot et connecté en parallèle avec le capteur inductif (46).

5. Machine de transfert selon la revendication 1 ou 2, caractérisée en ce qu'elle comprend des chariots (5) munis d'un frein électromagnétique (32) associé au train de roulement motorisé (10) et alimenté par le circuit d'asservissement (45).

6. Machine de transfert selon la revendication 1, caractérisée en ce qu'elle comprend des chariots (5) comportant un train arrière motorisé (10) relié par une transmission (28) à un train avant (11).

7. Machine de transfert selon la revendication 1 ou 5, caractérisée en ce qu'elle comprend des chariots (5) comportant un train arrière motorisé (10) et un train avant (90) constitué par deux roues folles (91) sur des pivots (92) perpendiculaires au plan du chariot.

8. Machine de transfert selon la revendication 1, caractérisée en ce qu'elle comprend, d'une part, des chariots (5) roulants, motorisés dont au moins le train arrière (10) comporte des roues (9) associées à des dentures (81) périphériques et, d'autre part, une voie de circulation présentant au moins localement des crémaillères (82) parallèles à l'axe de la voie pour l'engrènement avec les dentures.

9. Machine de transfert selon la revendication 1 ou 2, caractérisée en ce qu'elle comprend des chariots comportant chacun un train arrière motorisé (10) relié à l'organe moteur par un réducteur (17) à pignons et à courroies crantées.

10. Machine de transfert selon la revendication 5, caractérisée en ce que le frein électromagnétique comprend, d'une part, une bobine magnétique (33) annulaire, reliée électriquement au circuit d'asservissement, entourant l'arbre moteur à proximité d'une roue (9) et présentant en vis-à-vis de la face latérale de ladite roue un disque annulaire de friction (34) et, d'autre part, sur la face latérale de ladite roue, un disque annulaire (35) en matière magnétique monté, par des languettes déformables élastiquement, immobilisé angulairement sur ladite roue mais déplaçable latéralement par rapport à cette dernière sous l'action magnétique de la bobine.

11. Machine de transfert selon l'une des revendications 1 à 10, caractérisée en ce que chaque chariot comporte, sur sa face inférieure, deux membrures (37) de renforcement, parallèles au plan médian longitudinal de la platine, pourvues de semelles d'appui résistantes et délimitant deux compartiments latéraux (39) contenant deux batteries d'accumulateurs (40) rechargeables formant la source d'énergie et un compartiment central (44) contenant le circuit d'asservissement (45).

12. Machine de transfert selon la revendication 11, caractérisée en ce que l'une des membrures (37) au moins est pourvue de moyens de centrage (79) aptes à coopérer avec des moyens d'indexage (76) propres à la voie de circulation.

13. Machine de transfert selon la revendication 1, caractérisée en ce que le pare-choc (66) est constitué par une barre montée pivotante sur la face frontale (6e) de chaque chariot et escamotable entre des tampons de contact (67), ladite barre actionnant l'interrupteur de contact (65).

14. Machine de transfert selon la revendication 1, caractérisée en ce qu'elle comprend des chariots (5) comportant chacun en relation avec leurs bords longitudinaux, deux taquets d'accostage (93) destinés à coopérer chacun avec un doigt (96) s'élevant de façon escamotable à partir de la voie de circulation (I) et définissant pour le taquet un point de pivotement selon un axe vertical passant par l'axe de l'arbre du train arrière motorisé.

15. Machine de transfert selon la revendication 14, caractérisée en ce que chaque taquet (93) comporte un détecteur de présence (102) relié au circuit d'asservissement.

16. Machine de transfert selon la revendication 1, caractérisée en ce que le circuit d'asservissement comprend un capteur de mesure (56) de la vitesse propre de chaque chariot, ledit capteur étant constitué par une génératrice tachymétrique accouplée à l'organe moteur (16) et fournissant un signal analogique, image de la vitesse de déplacement du chariot sur la voie de circulation.

17. Machine de transfert selon la revendication 1, caractérisée en ce que le circuit d'asservissement comprend :
— un module générant, dès l'émission d'un signal de présence par le capteur inductif ou le détecteur télémétrique, un signal analogique image dans le temps d'une courbe de ralentissement et de vitesse minimale référencée à partir d'une vitesse maximale du chariot,
— et un premier comparateur délivrant, lorsque le signal du capteur de vitesse devient supérieur au signal image de ralentissement, un signal de commande déclenchant l'interruption d'alimentation du groupe motoréducteur et l'excitation du frein.

18. Machine de transfert selon la revendication 1 ou 17, caractérisée en ce que le circuit d'asservissement comprend, en outre, un second comparateur délivrant, lorsque le signal de vitesse devient égal au signal image de vitesse minimale de la courbe de ralentissement, un signal de commande rétablissant l'alimentation petite vitesse du groupe motoréducteur et désexcitant le frein.

19. Machine de transfert selon les revendications 1 et 14, caractérisée en ce que la voie de circulation comprend des segments rectilignes (S₁) de roulement et de guidage et des aires planes (100) de pivotement dans le plan des chariots.

20. Machine de transfert selon la revendication 19, caractérisée en ce que la voie de circulation (I) comporte un capteur (101) de fin de pivotement en relation avec chaque aire de pivotement (100) et chaque doigt.

21. Machine de transfert selon l'une des revendications 1, 19 ou 20, caractérisée en ce qu'elle comprend une voie de circulation comportant plusieurs segments rectilignes (S₁), des aires de pivotement (100) et au moins un module d'aiguillage (103) entre deux segments rectilignes parallèles.

## Claims

1. Free transfer machine of the type comprising a trackway (I) set up in relation with work stations (P), each one of which is provided with a retractable stop member, and independent travelling carriages (5) which are carried, guided and driven along the trackway and which are adapted to transfer the loads which they support, from one work station to another, each carriage being equipped with a train of driving wheels actuated by an on-board electric drive member energized from an equally on-board battery, transfer machine characterized in that :
— each carriage comprises :
 • a variable speed motor (15),
 • a rechargeable battery connected to contact blocks ((41),
 • and an individual travelling control system comprising a motor supply and control circuit (45) which is controlled by a switch (65) actuated by a front bumber (66) and by a contactor (73) mounted in series with the switch and carried by the lower face of the carriage in such a way as to be actuated by the retractable stop members, said circuit being furthermore placed under the control of environment sensors (46, 53),
— the trackway (I) comprises, in relation with each work station, reed-contacts (42) connected to an electric charge device and adapted to cooperate with the contact blocks (41).

2. Transfer machine according to claim 1, characterized in that it comprises carriages (5) equipped with two rolling trains (10 and 11), one of which at least is provided with a free wheel device (80).

3. Transfer machine according to claim 1, characterized in that the environment sensors comprise an inductive sensor (46) carried by each carriage and metallic bars (47) adapted via supports (48) on the trackway upstream of singularities present on said trackway.

4. Transfer machine according to claims 1 and 3, characterized in that the environment sensors further comprise, a telemetric presence finder (53) situated on the front face (6e) of each carriage and connected in parallel with said inductive sensor (46).

5. Transfer machine according to claim 1 or 2, characterized in that it comprises carriages (5) equipped with an electromagnetic brake (32) associated to the motorized rolling train (10) and supplied by the servo-control circuit (45).

6. Transfer machine according to claim 1, characterized in that it comprises carriages (5) equipped with a motorized rear train (10) connected via a transmission (28) to a front train (11).

7. Transfer machine according to claim 1 or 5, characterized in that it comprises carriages (5) comprising a motorized rear train (10) and a front train (90) constituted by two idle wheels (91) mounted on pins (92) perpendicular to the plane of the carriage.

8. Transfer machine according to claim 1, characterized in that it comprises, on the one hand, motorized travelling carriages (5) of which at least the rear train (10) comprises wheels (9) associated to peripheral teeth (81) and, on the other hand, a trackway equipped at least locally with tooth racks (82) parallel to the axis of the trackway for engagement with said teeth.

9. Transfer machine according to claim 1 or 2, characterized in that it comprises carriages, each one of which is equipped with a motorized rear train (10) connected with the driving member via a reduction gear system (17) composed of gears and synchronous belts.

10. Transfer machine according to claim 5, characterized in that the electromagnetic brake comprises, on the one hand, an annular magnetic coil (33), connected electrically to the servo-control circuit, which surrounds the driving shaft proximate to a wheel (9) and presenting in facing relationship to the lateral face of said wheel an annular friction disk (34) and, on the other hand, on the lateral face of said wheel, an annular disk in magnetic material mounted via elastically deformable strips, said disk being immobilized angularly on said wheel but being movable laterally with respect to the latter under the magnetic action of the coil.

11. Transfer machine according to one of claims 1 to 10, characterized in that each carriage comprises on its lower face, two stiffening members (37) parallel to the longitudinal median plane of the plate, which stiffening members are provided with resistant sole plates and define two lateral compartments (39) which contain two rechargeable accumulator batteries (40) constituting the source of power, and a central compartment (44) containing the servo-control circuit (45).

12. Transfer machine according to claim 11, characterized in that at least one of the stiffening members (37) is provided with centering means (79) adapted to cooperate with indexing means (76) provided on the trackway.

13. Transfer machine according to claim 1, characterized in that the bumper (66) is constituted by a bar mounted for pivoting on the front face (6e) of each carriage and retractable between buffers (67), said bar actuating the contact switch (65).

14. Transfer machine according to claim 1, characterized in that it comprises carriages (5) each one of which is equipped, in relation with their longitudinal edges, with bumping blocks (93) which are each adapted to cooperate with a finger (96) rising in retractable manner from the trackway (I) and defining for said block a pivoting point about a vertical axis traversing the axis of the shaft of the motorized rear train.

15. Transfer machine according to claim 14, characterized in that each block (93) comprises a presence finder (102) connected to the servo-control circuit.

16. Transfer machine according to claim 1, characterized in that the servo-control circuit comprises a sensor (56) for measuring the travelling speed of each carriage, said sensor being constituted by a tacho-generator coupled to the driving member (16) and supplying an analog video signal of the travelling speed of the carriage on the trackway.

17. Transfer machine according to claim 1, characterized in that the servo-control circuit comprises :
— a module which, once a presence signal is issued by the inductive sensor or by the tacho-generator, produces a video analog time signal of a slowing down curve and of minimum speed referenced from a maximum speed of the carriage,
— and a first comparator which, when the signal from the speed sensor exceeds the slowing down video signal, produces a control signal triggering the interruption of the supply to the reduction gear and the energizing of the brake.

18. Transfer machine according to claim 1 or 17, characterized in that the servo-control circuit further comprises a second comparator which, when the speed signal becomes equal to the video signal of minimum speed of the slowing down curve, produces a control signal restoring the low speed supply to the reduction gear and de-energizing the brake.

19. Transfer machine according to claims 1 and 14, characterized in that the trackway comprises rectilinear travelling and guiding segments (S₁) and plane pivoting areas (100) inside the plane of the carriage.

20. Transfer machine according to claim 19, characterized in that the trackway (I) comprises an end-of-pivoting sensor (101) in relation with each pivoting area (100) and each finger.

21. Transfer machine according to one of claims 1, 19 or 20, characterized in that it comprises a trackway comprising a plurality of rectilinear segments (S₁), pivoting areas (100) and at least one switching module (103) between two parallel rectilinear segments.

**Patentansprüche**

1. Freie Fördereinrichtung vom Typ mit einer Förderbahn (I), die in Bezug auf Eingriffsposten (P) angeordnet ist, die jeweils mit einem einziehbaren Anhalteorgan versehen sind, und mit unabhängigen rollenden Wägen (5), die getragen, geführt und in Bewegung angetrieben werden entlang der Bahn und dazu bestimmt sind, von Posten zu Posten, Lasten, die sie stützen, zu übertragen, wobei jeder Wagen eine Reihe von Antriebsrädern aufweist, die von einem eingebauten elektrischen Motororgan betätigt werden, der seine Energie ausgehend von einer ebenfalls eingebauten Batterie erhält, **dadurch gekennzeichnet,** daß jeder Wagen aufweist :
— einen Motor (15) mit veränderlicher Geschwindigkeit,
— eine wiederaufladbare Batterie, die mit Kontaktbuchsen (41) verbunden ist,
— und einem individuellen Betätigungssystem der Bewegung, mit einem Zuführ- und Regelschaltkreis (45) des Motors, gesteuert durch einen Unterbrecher (65), der durch einen vorderen Stoßfänger (66) und einen Schalter (73) betätigt wird, der in Reihe mit dem Unterbrecher angeordnet ist und von der Unterseite des Wagens getragen wird, um durch die einziehbaren Halteorgane betätigt zu werden, wobei der Schaltkreis weiterhin in Abhängigkeit von Umgebungsaufnehmern (46, 53) angeordnet ist,
— die Bahn (I) im Verhältnis zu einem jeden Posten mit biegsamen Plättchen oder Zungen (42) versehen ist, die einer elektrischen Aufladevorrichtung zugeordnet sind, die für das Zusammenwirken mit den Buchsen (41) dient.

2. Fördereinrichtung nach Anspruch 1, **dadurch gekennzeichnet,** daß sie Wägen (5) aufweist, die mit zwei Räderunterbauvorrichtungen (10 und 11) versehen sind, von denen wenigstens eine mit einer Freilaufeinrichtung (80) versehen ist.

3. Fördereinrichtung nach Anspruch 1, **dadurch gekennzeichnet,** daß die Umgebungsaufnehmer einen induktiven Aufnehmer (46) aufweisen, der von einem jeden Wagen getragen wird, und metallische Stäbchen (47) aufweist, die durch Stützen (48) auf der Bewegungsbahn stromauf von einzelnen Punkten der genannten Bahn angepaßt sind.

4. Fördereinrichtung nach Anspruch 1 und 3, **dadurch gekennzeichnet,** daß die Umgebungsaufnehmer weiterhin einen telemetrischen Detektor (53) des Vorhandenseins aufweisen, der auf der Vorderseite (6e) eines jeden Wagens angeordnet ist, und parallel mit dem induktiven Aufnehmer (46) verbunden ist.

5. Fördereinrichtung nach Anspruch 1 oder 2, **dadurch gekennzeichnet, daß** sie Wägen (5) aufweist, die mit einer elektromagnetischen Bremse (32) versehen sind, die dem angetriebenen Unterbau (10) zugeordnet ist und durch den Regelschaltkreis (45) gespeist wird.

6. Fördereinrichtung nach Anspruch 1, **dadurch gekennzeichnet, daß** sie Wägen (5) aufweist, die einen angetriebenen hinteren Räderunterbau (10) aufweisen, der über ein Getriebe (28) mit einem vorderen Räderunterbau (11) verbunden ist.

7. Fördereinrichtung nach Anspruch 1 oder 5, **dadurch gekennzeichnet, daß** sie Wägen (5) aufweist, die einen angetriebenen hinteren Räderunterbau (10) und einen vorderen Räderunterbau (90) aufweisen, der durch zwei freilaufende Räder (91) auf Zapfen (92) gebildet wird, die senkrecht zur Ebene des Wagens verlaufen.

8. Fördereinrichtung nach Anspruch 1, **dadurch gekennzeichnet, daß** sie einerseits rollende angetriebene Wägen (5) aufweist, bei denen wenigstens der hintere Unterbau (10) Räder (9) aufweist, die Umfangszähnen (81) zugeordnet sind, und andererseits, eine Förderbahn aufweist, die wenigstens zwei örtliche Zahnstangen (82) aufweist, die parallel zur Achse der Bahn zum Eingriff mit den Zähnen verläuft.

9. Fördereinrichtung nach Anspruch 1 oder 2, **dadurch gekennzeichnet, daß** sie Wägen aufweist, die jeweils einen angetriebenen hinteren Unterbau (10) aufweisen, der mit dem Motororgan durch ein Reduziergetriebe (17) mit Ritzeln und Zahnriemen verbunden ist.

10. Fördereinrichtung nach Anspruch 5, **dadurch gekennzeichnet,** daß die elektromagnetische Bremse einerseits eine ringförmige magnetische Spule (33), die elektrisch mit dem Regelschaltkreis verbunden ist, wobei sie die Motorwelle in der Nähe eines Rades (9) umgibt und gegenüber der Seitenfläche des Rades eine ringförmige Reibscheibe (34) aufweist, und andererseits, auf der Seitenfläche des Rades, eine ringförmige Scheibe (35) aus magnetischem Material aufweist, die durch elastisch verformbare Zungen winkelig festgelegt werden kann auf dem Rad, jedoch seitlich versetzbar bezüglich des letzteren unter Magneteinwirkung der Spule.

11. Fördereinrichtung nach einem der Ansprüche 1 bis 10, **dadurch gekennzeichnet,** daß jeder Wagen an seiner Unterseite zwei Verstärkungsgurtungen (37) aufweist, die parallel zur Längsmittenebene der Platine verlaufen, versehen mit widerstandsfähigen Andrucksohlen und zwei Seitenräume (39) begrenzend, mit zwei wiederaufladbaren Akkumulatorenbatterien (40), die die Energiequelle bilden, und einem zentralen Abteil (44), das den Regelschaltkreis (45) aufweist.

12. Fördereinrichtung nach Anspruch 11, **dadurch gekennzeichnet, daß** wenigstens eine der Gurtungen (37) mit Zentrierungseinrichtungen (79) versehen ist, die dazu geeignet sind, mit zu der Förderbahn gehörenden Indexierungseinrichtungen (76), zusammenzuwirken.

13. Fördereinrichtung nach Anspruch 1, **dadurch gekennzeichnet, daß** der Stoßfänger (66) gebildet wird aus einer auf der Vorderseite (6e) eines jeden Wagens schwenkbar angeordneten und zwischen Kontaktdämpfern (67) einziehbaren Stange, wobei die Stange den Kontaktunterbrecher (65) betätigt.

14. Fördereinrichtung nach Anspruch 1, **dadurch gekennzeichnet, daß** sie Wägen (5) aufweist, die jeweils in Bezug auf ihre Längsseiten zwei Kupplungsmitnehmer (93) aufweist, die dazu bestimmt sind, jeweils mit einem Finger (96) zusammzuwirken, der sich auf einziebare Weise ausgehend von der Förderbahn (I) erhebt und für den Mitnehmer einen Schwenkpunkt gemäß einer vertikalen Achse bildet, die durch die Achse der Welle des hinteren angetriebenen Unterbaus hindurchläuft.

15. Fördereinrichtung nach Anspruch 14, **dadurch gekennzeichnet, daß** jeder Mitnehmer (93) einen Detektor zur Feststellung des Vorhandenseins (102) aufweist, der mit dem Regelschaltkreis verbunden ist.

16. Fördereinrichtung nach Anspruch 1, **dadurch gekennzeichnet, daß** der Regelschaltkreis einen Meßaufnehmer (56) der Eigengeschwindigkeit eines jeden Wagens aufweist, wobei der Aufnehmer gebildet wird durch einen Tachogenerator, der mit dem Motororgan (16) gedoppelt ist und ein analoges Bildsignal der Bewegungsgeschwindigkeit des Wagens auf der Förderbahn liefert.

17. Fördereinrichtung nach Anspruch 1, **dadurch gekennzeichnet,** daß der Regelschaltkreis aufweist:
— ein Modul, das nach der Emission eines Signals des Vorhandenseins durch einen induktiven Aufnehmer oder den telemetrischen bzw. Abstands-Aufnehmer, ein analoges Bildsignal in der Zeit einer Verzögerungskurve und Minimalgeschwindigkeit erzeugt, bezogen ausgehend einer maximalen Geschwindigkeit des Wagens,
— und einen ersten Vergleicher, der, wenn das Signal des Geschwindigkeitsaufnehmers größer wird als das Bildsignal des Verzögerns, ein Befehlssignal liefert, das die Unterbrechung der Speisung bzw. des Antriebs der Gruppe Reduzierantrieb und das Ansprechen der Bremse auslöst.

18. Fördereinrichtung nach Anspruch 1 oder 17, **dadurch gekennzeichnet, daß** der Regelschaltkreis weiterhin einen zweiten Vergleicher aufweist, der, wenn das Geschwindigkeitssignal gleich dem Bildsignal der minimalen Geschwindigkeit der Verzögerungskurve wird, ein Befehlssignal liefert, das den Antrieb zu einer kleinen Geschwindigkeit der Gruppe Reduzierantrieb erneut einstellt und die Bremse löst.

19. Fördereinrichtung nach Anspruch 1 und 14, **dadurch gekennzeichnet,** daß die Förderbahn geradlinige Segmente (S$_1$) des Rollens und Führens und ebene Schwenkbereiche (100) in der Ebene der Wägen aufweist.

20. Fördereinrichtung nach Anspruch 19, **dadurch gekennzeichnet,** daß die Förderbahn (I) einen Aufnehmer (101) des Endes des Schwenkens in Bezug auf jeden Schwenkbereich (100) und jeden Finger aufweist.

21. Fördereinrichtung nach einem der Ansprüche 1, 19 oder 20, **dadurch gekennzeichnet,** daß sie eine Förderbahn aufweist, die mehrere geradlinige Segmente (S$_1$), Schwenkbereiche (100) und wenigstens ein Einfädelmodul (103) zwischen zwei geradlinigen parallelen Segmenten aufweist.

Fig. 1

Fig. 2

Fig.2

Fig.4

Fig. 5

Fig. 6

Fig.7

Fig.8

EP 0 285 527 B1

Fig.10

Fig.9

Fig.11

Fig.12

Fig. 13

Fig. 14

EP 0 285 527 B1

Fig.15

6

9

9

81

81

10

82

82

# Fig.16

98   6a   6

93   95   99

6b

96

97

# Fig.18

Fig.17

EP 0 285 527 B1

Fig. 19

Fig. 20

Fig. 21